# EUROPÄISCHE PATENTSCHRIFT

(11) **EP 1 727 971 B1**
(45) Veröffentlichungstag und Bekanntmachung des Hinweises auf die Patenterteilung: **31.10.2007**
(21) Anmeldenummer: 05731749.7
(22) Anmeldetag: 16.03.2005
(51) Int. Cl.: F01D 21/00, G01N 27/00

(54) **ANORDNUNG UND VERFAHREN ZUR BESCHÄDIGUNGSDETEKTION AN EINER KOMPONENTE EINER STRÖMUNGSMASCHINE**
ARRAY AND METHOD FOR DETECTING DAMAGES IN A COMPONENT OF A JET ENGINE
ENSEMBLE ET PROCEDE POUR LA DETECTION D'UN ENDOMMAGEMENT SUR UN COMPOSANT D'UNE TURBOMACHINE

(30) Priorität: 23.03.2004 DE 102004014213; 11.02.2005 DE 102005006403
(43) Veröffentlichungstag der Anmeldung: 06.12.2006
(73) Patentinhaber: SIEMENS AKTIENGESELLSCHAFT, 80333 München (DE)
(72) Erfinder: BRUMMEL, Hans-Gerd, 13465 Berlin (DE); LINNERT, Uwe, 90766 Fürth (DE); WILLSCH, Michael, 90762 Fürth (DE)
(86) Internationale Anmeldenummer: PCT/EP2005/051193
(87) Internationale Veröffentlichungsnummer: WO 2005/093221

(56) Entgegenhaltungen:
- EP-A- 1 457 643
- GB-A- 1 168 771
- GB-A- 1 239 349
- US-A- 5 306 088
- US-A- 5 445 027
- US-B1- 6 441 937

## Beschreibung

Die Erfindung betrifft eine Anordnung und ein Verfahren zur Detektion einer Beschädigung einer Komponente einer Strömungsmaschine nach dem Oberbegriff des Anspruches 1 bzw. 14.

Eine insbesondere als Gasturbine ausgebildete Strömungsmaschine arbeitet bei einer sehr hohen Temperatur, die beispielsweise über 1300°C liegen kann. Deshalb sind die in einem so heißen Bereich angeordneten Komponenten, also insbesondere die am Turbinen-Rotor angeordneten Laufschaufeln und/oder die am Turbinen-Stator angeordneten Leitschaufeln, einer starken thermischen Belastung ausgesetzt. Dies kann zu einer Beschädigung der Komponenten und damit zu einem Ausfall oder zumindest zu einer Verschlechterung der Effizienz der Strömungsmaschine führen.

Aus der DE 1 915 930 C ist eine Anordnung bekannt, bei der ein isolierter elektrischer Draht in beschädigungsgefährdeten Bereichen von Lauf- oder Leitschaufeln verlegt ist. Ausgewertet wird der elektrische Widerstand des elektrischen Drahtes. Bei einer Beschädigung der zu überwachenden Komponenten reißt auch der elektrische Draht, wodurch sich eine detektierbare Widerstandsänderung einstellt. Die Verlegung elektrischer Leitungen im heißen Turbinen-Innenbereich hat sich jedoch als schwierig und auch störanfällig herausgestellt. Es ist eine relativ aufwändige Aufbautechnik erforderlich. Außerdem herrscht im Turbinen-Innenbereich eine starke elektromagnetische Störstrahlung. Folglich kann es zu unerwünschten hochfrequenten Störeinkopplungen in den isolierten elektrischen Draht kommen, wodurch die Gefahr einer Fehlmessung steigt.

Mit der US 6,512,379 B2 wird eine Detektions-Anordnung für Turbinenschaufeln auf der Basis hochfrequenter elektromagnetischer Signale offenbart. Auf der Internetseite http://www.ornl.gov/sci/phosphors/turb.htm der Oakridge National Labs, Stand 11.09.2003, wird außerdem eine optische Detektions-Anordnung beschrieben, bei der die zu überwachenden Laufschaufeln mit fluoreszierenden Leuchtmarkern versehen sind. Mittels dieser Detektions-Anordnungen lassen sich aber gegebenenfalls nicht alle kritischen Bereiche der Schaufeln überwachen. Dies gilt insbesondere für die stehenden Leitschaufeln.

Weiterhin zeigen US 5306088 ein optisches Verfahren, US 5445027 ein akustisches Verfahren und GB 1239349 ein pneumatisches Verfahren zur Detektion von Schaufelveränderungen einer Gasturbine.

Aus dem Fachaufsatz "Automatische Stromabnehmer-Senkeinrichtung", Bahn Praxis, 10/2002, Seiten 99 bis 102, wird außerdem eine Anordnung zur Verschleißerfassung beschrieben. Die Anordnung ist allerdings für ein anderes Technikgebiet - nämlich für die Bahn-Technik - bestimmt. Zur Überwachung der Schleifleiste eines Bahn-Pantographen ist ein Druckluftschlauch eingebettet. Dieser wird bei entsprechend starker Abnutzung der Schleifleiste aufgerieben, wodurch es in dem Druckluftschlauch zu einem Druckabfall kommt und als Folge ein Signal ausgelöst wird.

Der Erfindung liegt die Aufgabe zu Grunde, eine Anordnung und ein Verfahren der gattungsgemäßen Art so weiterzubilden, dass eine Überwachung der Komponenten auch bei den harten Umgebungsbedingungen im Inneren der Strömungsmaschine sicher und im gesamten kritischen Bereich möglich ist.

Die die Anordnung betreffende Aufgabe wird erfindungsgemäß durch die Merkmale im kennzeichnenden Teil des Anspruches 1 gelöst. Durch die Ausbildung der Messleitung als optischer Leiter, als akustischer Leiter oder als Druck- oder Strömungsleitung ergibt sich eine einfache und dennoch robuste Aufbautechnik, die auch bei den harschen Umgebungsbedingungen im Innenbereich der Strömungsmaschine zu einer sicheren Betriebsweise der Detektions-Anordnung führt. Insbesondere weisen die genannten Messleitungstypen auch eine hohe elektromagnetische Verträglichkeit (EMV) auf. Damit ergibt sich im Unterschied zu dem isolierten elektrischen Messdraht keine Störanfälligkeit gegenüber einer hochfrequenten elektromagnetischen Strahlung. Außerdem lässt sich die Messleitung in alle als kritisch erkannten Bereiche der zu überwachenden Komponente führen, sodass es keine unerwünschten Überwachungslücken gibt.

Die das Verfahren betreffende Aufgabe wird erfindungsgemäß durch die Merkmale des kennzeichnenden Teils des Anspruches 19 gelöst. Es ergeben sich die gleichen Vorteile wie bei der erfindungsgemäßen Anordnung.

Vorteilhafte Ausgestaltungen der Anordnung und des Verfahrens gemäß der Erfindung ergeben sich aus den von Anspruch 1 bzw. 19 abhängigen Ansprüchen.

Eine besonders einfache Realisierung der Messleitung im Inneren der zu überwachenden Komponente besteht in der Ausbildung einer röhrenförmigen Ausnehmung oder auch in der Einbettung eines Röhrchens. Dabei kann entweder der durch die Ausnehmung gebildete oder im Inneren des Röhrchens vorhandene Hohlraum direkt als Messleitung oder zur Aufnahme weiterer Komponenten der Messleitung dienen.

Dabei ist es günstig, wenn der Grundkörper der zu überwachenden Komponente mit einer Schutzbeschichtung versehen ist und wenn die Ausnehmung im Grundkörper und unmittelbar angrenzend an die Schutzbeschichtung vorgesehen ist. Vorteilhafterweise wird dann zumindest ein Teil der Wand der Ausnehmung durch die Schutzbeschichtung gebildet. Bei einer Beschädigung der Schutzbeschichtung in diesem Bereich hat dies unmittelbar einen Einfluss auf die Messleitung.

Zum Schutz vor einer übermäßigen Überhitzung der zu überwachenden Komponente ist es günstig, wenn das eingebettete Röhrchen verglichen mit der Komponente aus dem Material mit der geringsten Hitzebeständigkeit, insbesondere mit dem niedrigsten Schmelzpunkt besteht. Dadurch wird erreicht, dass vor einer Beschädigung der Komponente durch eine zu starke Überhitzung das eingebettete Röhrchen schmilzt oder zumindest sich in seinen Eigenschaften so verändert, dass ein entsprechendes Messsignal generiert wird. Die Strömungsmaschine kann dann noch vor Zerstörung der zu überwachenden Komponente abgeschaltet werden.

Es ist von Vorteil, wenn der Grundkörper einen Hohlraum aufweist und die Messleitung einen im Inneren der zu überwachenden Komponente mittels eines an einer Innenwand des Hohlraums angeordneten Röhrchens gebildeten Hohlraum umfasst. Mit dem Anordnen der Messleitung an der Innenwand des Hohlraums der zu überwachenden Komponente ergibt sich eine einfache und robuste Aufbautechnik.

Dabei kann eine besonders einfache Befestigung des Röhrchens an der Innenwand des Hohlraums der zu überwachenden Komponente mittels einer Lötverbindung an der Innenwand des Hohlraums erreicht werden. Mit einer Lötverbindung ist zudem ein guter Wärmekontakt des Rohrchens mit dem Grundkörper gewährleistet.

Weiter lässt sich das Röhrchen mittels eines mechanischen Befestigungsmittels, insbesondere einer Befestigungsschelle, an der Innenwand des Hohlraums befestigen. Eine solche Befestigungsart zeichnet sich durch besondere Zuverlässigkeit aus, das Röhrchen in ständigem Wärmekontakt mit dem Grundkörper zu halten.

Vorteilhafter Weise ist das Röhrchen in einer Ausnehmung, insbesondere einer Nut, angeordnet. Damit ist das Röhrchen besonders stabil an der Innenwand des Hohlraums der zu überwachenden Komponente angeordnet, als auch der Wärmekontakt des Rohrchens mit dem Grundkörper durch eine vergrößerte Kontaktfläche zwischen Röhrchen und Grundkörper verbessert.

Vorzugsweise ist der Grundkörper der zu überwachende Komponente mit einer Schutzbeschichtung versehenen. Dabei ist es zum Schutz vor einer übermäßigen Überhitzung der zu überwachenden Komponente günstig, wenn das Röhrchen verglichen mit der Komponente aus dem Material mit der geringsten Hitzebeständigkeit, insbesondere mit dem niedrigsten Schmelzpunkt besteht. Die Hitzebeständigkeit des Röhrchens kann vorteilhaft derart gewählt sein, dass bei einer Beschädigung der Schutzschicht das Röhrchen vor einer Beschädigung des Grundkörpers der Komponente durch eine zu starke Überhitzung schmilzt oder zumindest sich in seinen Eigenschaften so verändert, dass ein entsprechendes Messsignal generiert wird. Die Strömungsmaschine kann dann noch vor Zerstörung der zu überwachenden Komponente abgeschaltet werden.

Besonders einfach und gleichzeitig auch robust ist die Messleitung in einer Ausgestaltung als Druckleitung oder als Strömungsleitung. Außer der Ausnehmung oder dem Röhrchen sind dann in der zu überwachenden Komponente keine weiteren Bestandteile für die Messleitung vorhanden.

Den Ort einer Beschädigung kann man vorzugsweise durch die Auswertung eines Reflexionssignals, das insbesondere an der Beschädigungsstelle reflektiert worden ist, ermitteln. Hierzu lässt sich beispielsweise ein Laufzeitverfahren einsetzen.

Mittels einer Messgrößenerfassung an verschiedenen Stellen der Messleitung, insbesondere am Anfang und am Ende der Messleitung, kann die Erfassungsgenauigkeit für das Vorliegen einer Beschädigung deutlich erhöht werden. Dies erreicht man insbesondere durch die Bildung und Auswertung eines Vergleichssignals, vorzugsweise eines Differenzsignals, zwischen den an den verschiedenen Messstellen erfassten Messgrößen. Mittels eines derartigen Differenzverfahrens können auch Hinweise über den genauen Fehlerort abgeleitet werden.

Bevorzugte Ausführungsbeispiele der Erfindung werden nunmehr an Hand der Zeichnung näher erläutert. Zur Verdeutlichung ist die Zeichnung nicht maßstäblich ausgeführt, und gewisse Aspekte sind nur schematisiert dargestellt.

Im Einzelnen zeigen:
- Fig. 1: ein erstes Ausführungsbeispiel einer Detektions-Anordnung für Komponenten einer Strömungsmaschine,
- Fig. 2: eine der zu überwachenden Komponenten gemäß dem Ausführungsbeispiel nach Fig. 1 in perspektivischer Darstellung,
- Fig. 3: eine erste Ausführungsform der Komponente von Fig. 2 in einer Schnittdarstellung,
- Fig. 4: eine zweite Ausführungsform der Komponente von Fig. 2 in einer Schnittdarstellung,
- Fig. 5: eine der zu überwachenden Komponenten gemäß dem Ausführungsbeispiel nach Fig. 1 in perspektivischer Darstellung,
- Fig. 6: eine Ausführungsform der Komponente von Fig. 5 in einer Schnittdarstellung,
- Fig. 7: ein zweites Ausführungsbeispiel einer Detektions-Anordnung und
- Fig. 8: ein drittes Ausführungsbeispiel einer Detektions-Anordnung.

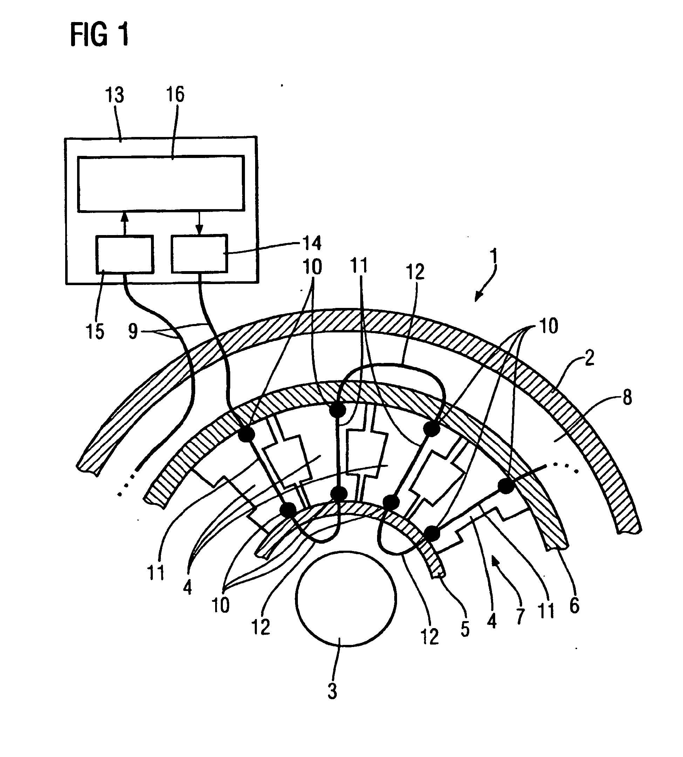

Einander entsprechende Teile sind in den Fig. 1 bis 8 mit denselben Bezugszeichen versehen.

Im Folgenden wird unter Bezugnahme auf die Fig. 1 eine Anordnung zur Beschädigungsdetektion an einer Strömungsmaschine nach einem ersten Ausführungsbeispiel beschrieben. In Fig. 1 ist ein Querschnittsausschnitt einer insbesondere als Gasturbine ausgebildeten Strömungsmaschine 1 gezeigt. Innerhalb einer Gehäuse-Außenwand 2 sind eine Rotorwelle 3 sowie mehrere ortsfest angeordnete Leitschaufeln 4 vorhanden. Die Leitschaufeln 4 befinden sich zwischen einem inneren und äußeren Leitschaufelträger 5 bzw. 6. Die Gehäuse-Außenwand 2, der innere und äußere Leitschaufelträger 5 bzw. 6 sowie die Leitschaufeln 4 sind mechanisch fest miteinander verbunden, wobei die zugehörigen Befestigungsmittel der Schnittdarstellung von Fig. 1 nicht zu entnehmen sind.

Zwischen dem inneren und äußeren Leitschaufelträger 5 bzw. 6 befindet sich der eigentliche Turbinen-Innenbereich 7. In ihm sind neben den Leitschaufeln 4 auch die fest mit der Rotorwelle 3 verbundenen, in der Darstellung von Fig. 1 nicht gezeigten Lauf schaufeln angeordnet. Ein Arbeitsgas, das insbesondere durch Zündung eines Gas-Luft-Gemisches entsteht, wird mittels der ortsfesten Leitschaufeln 4 auf die Laufschaufeln geleitet, wodurch die Rotorwelle 3 zu einer Rotationsbewegung veranlasst wird. Das Arbeitsgas hat eine sehr hohe Temperatur, beispielsweise von über 1000°C. Insbesondere kann sich die im Turbinen-Innenbereich 7 auf Grund des Arbeitsgases einstellende Temperatur in einem Bereich zwischen 1300°C und 1600°C bewegen. Deshalb werden die in dem Turbinen-Innenbereich 7 angeordneten Komponenten, also insbesondere die Leitschaufeln 4, aber auch die Laufschaufeln, gekühlt. So wird den Leitschaufeln 4 mittels eines zwischen der Gehäuse-Außenwand 2 und dem äußeren Leitschaufelträger 6 angeordneten Kühlbereichs 8 ein Kühlmittel zugeführt. Für eine verbesserte Kühlung sind die Laufschaufeln 4 mit in den Figuren nicht dargestellten Kühlkanälen versehen. Als Kühlmittel kommt beispielsweise Luft in Frage.

Trotz der Kühlung kann es wegen thermischer Überlastung zu einer Beschädigung der im Turbinen-Innenbereich 7 angeordneten Komponenten kommen. Zur Detektion derartiger Defekte ist eine Messleitung 9 vorgesehen. Sie verläuft insbesondere auch durch das Innere der Leitschaufeln 4. Die Leitungsführung ist dabei so gewählt, dass die thermisch besonders stark beanspruchten Bereiche der Leitschaufeln 4 von der Messleitung 9 durchzogen werden.

Um die Montage der Messleitung 9 zu erleichtern, besteht sie vorzugsweise aus mehreren Abschnitten, die an Kupplungsstellen 10 zusammengefügt sind. Innerhalb der Leitschaufeln 4 verlaufen Teil-Messleitungen 11, die mittels Zwischenstücken 12 miteinander verbunden sind. Die eigentliche MessgrößenErfassung findet im Bereich der sensitiven Teil-Messleitungen 11 statt.

Die Messleitung 9 ist im Beispiel von Fig. 1 als Ringleitung ausgebildet, deren Anfang und Ende an eine Auswerteeinheit 13 angeschlossen sind. Die Messleitung 9 ist eine Druckleitung, deren eines Ende mit einer Druckquelle 14 und deren anderes Ende mit einem Drucksensor 15 verbunden ist. Die Druckquelle 14 erzeugt in der Messleitung 9 einen insbesondere durch eine zentrale Steuer-/Berechnungseinheit 16 vorgegebenen Druck. Dies erfolgt beispielsweise mittels Druckluft oder einem anderen komprimierten Gas. Der Drucksensor 15 ermittelt den tatsächlich am anderen Ende der Messleitung 9 anstehenden Druck und übermittelt diese Messgröße an die zentrale Steuer-/Berechnungseinheit 16.

Im Folgenden wird die Funktionsweise der in Fig. 1 gezeigten Detektions-Anordnung erläutert. Im fehlerfreien Fall wird der mittels der Druckquelle 14 in der Messleitung 9 eingestellte Druck annähernd konstant gehalten. Dies lässt sich insbesondere an Hand des am Drucksensor 15 gemessenen Druckwertes bewerkstelligen. Kleinere Druckschwankungen, die beispielsweise durch geringfügige Verluste an den Kupplungsstellen hervorgerufen werden, lassen sich über die zentrale Steuer-/Berechnungseinheit 16 und die Druckquelle 14 ohne weiteres ausgleichen.

Sobald an einer der überwachten Leitschaufeln 4, die zum Schutz vor thermischer Überhitzung mit einer Schutzbeschichtung 23 versehen sind, eine Beschädigung auftritt, wird auch die in diesem Bereich verlaufende Messleitung 9 in Mitleidenschaft gezogen. Dabei können die Leitschaufeln 4 insbesondere durch einen Riss oder ein Loch innerhalb der Leitschaufeln 4 oder auch bereits in der Schutzbeschichtung 23 beschädigt sein. Die Beeinträchtigung des Zustandes der Messleitung 9 kann dabei sowohl reversibel als auch irreversibel sein. Eine irreversible Beeinträchtigung wäre beispielsweise ein Einreißen der Messleitung 9. Reversibel wäre dagegen eine vorübergehende Verringerung des Leitungsquerschnitts. Diese Zustandsveränderungen an der Messleitung 9 führen insbesondere zu einem starken Druckabfall. Der Drucksensor 15 erfasst diese deutliche Veränderung der Messgröße, sodass in der zentralen Steuer-/Berechnungseinheit 16 die Beschädigung der zu überwachenden Komponente erkannt wird.

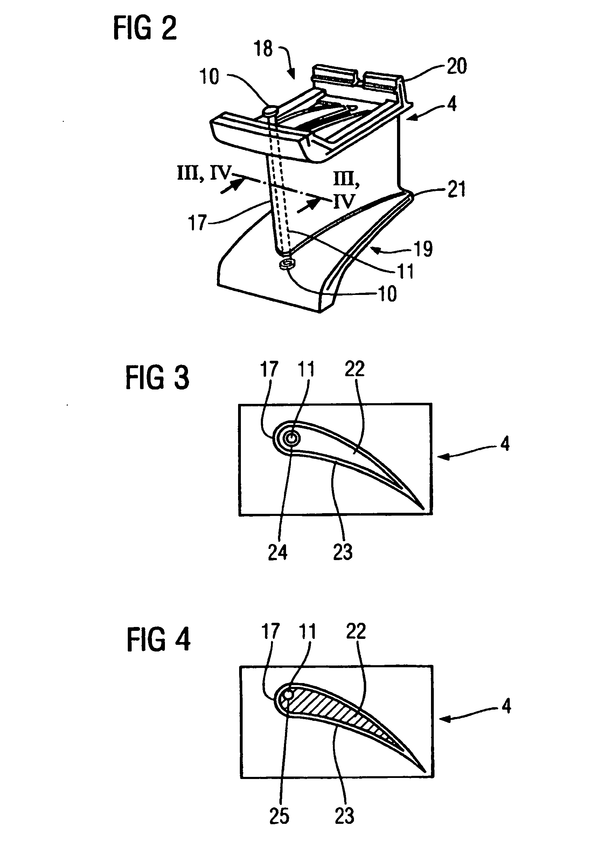

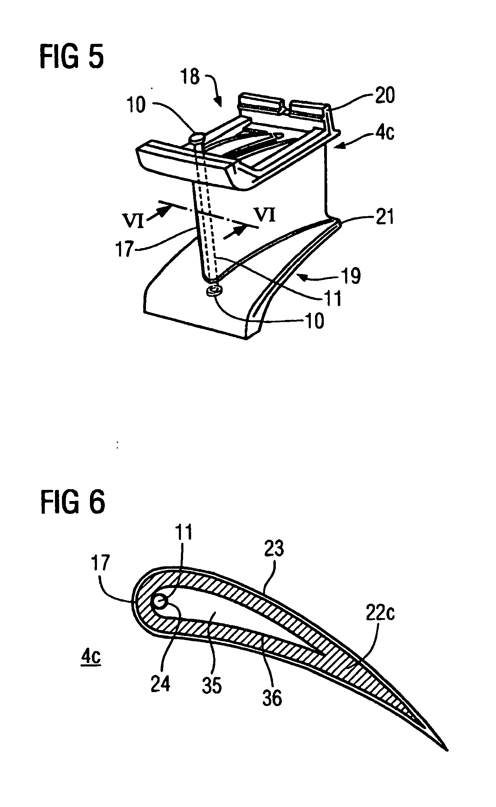

An Hand der perspektivischen Darstellungen von Fig. 2 und Fig. 5 sowie der Schnittdarstellungen von Fig. 3, Fig. 4 und Fig. 6 werden im Folgenden Beispiele zur Führung der Teil-Messleitung 11 innerhalb der zu überwachenden Leitschaufel 4 bzw. 4c näher erläutert. Die Leitschaufel 4 bzw. 4c ist insbesondere im Bereich ihrer Vorderkante 17 (= leading edge), auf die der heiße Arbeitsgasstrom zuerst auftrifft, gefährdet. In diesem kritischen Bereich, in dem die Gefahr einer Beschädigung der Leitschaufel 4 bzw. 4c besonders hoch ist, verläuft auch die Teil-Messleitung 11. Die beiden Kupplungsstellen 10 befinden sich in Vertiefungen 18 und 19, die jeweils auf der rückwärtigen Seite eines oberen bzw. unteren Trägerelementes 20 bzw. 21 der Leitschaufeln 4 vorgesehen sind.

Die Fig. 3 und 4 zeigen Darstellungen des in Fig. 2 mit III bzw. IV bezeichneten Schnitts. Die Leitschaufel 4 besteht aus einem Grundkörper 22, der zum Schutz vor thermischer Überhitzung mit einer Schutzbeschichtung 23 versehen ist. Die Fig. 6 zeigt eine Darstellung des in Fig. 5 mit VI bezeichneten Schnitts. Die Leitschaufel 4c besteht aus einem Grundkörper 22c, der zum Schutz vor thermischer Überhitzung ebenfalls mit einer Schutzbeschichtung 23 versehen ist. Zudem weist der Grundkörper 22c im Inneren einen Hohlraum 35 auf. Abgewandelte, aber dennoch zumindest funktionell vergleichbare Teile erhalten in Fig. 5 und Fig. 6 dieselben Bezugszeichen wie in Fig. 2 bis Fig. 4 jedoch mit einem nachgestellten c. Für den Grundkörper 22 bzw. 22c wird insbesondere ein Nickel-Material oder auch ein Nickel-Kobalt-Material eingesetzt. Die Schutzbeschichtung 23 (= thermal barrier coating = TBC) besteht dagegen bevorzugt aus einem hochtemperaturfesten Keramik-Material, wie zum Beispiel einer Yttrium-Zirkonium-Keramik.

Die Teil-Messleitung 11 ist gemäß der Ausgestaltung nach Fig. 3 als hohles Röhrchen 24 ausgebildet, das in den Grundkörper 22 im Bereich der Vorderkante 17 eingebettet ist. Hingegen ist die Teil-Messleitung 11 gemäß der Ausgestaltung nach Fig. 6 als hohles Röhrchen 24 ausgebildet, das in dem Hohlraum 35 an einer Innenwand 36 des Grundkörpers 22c angeordnet ist. Ein guter thermischer Kontakt zum Grundkörper 22c ergibt sich beispielsweise mittels einer Lötverbindung. Ebenso kann aber eine andere thermisch leitfähige Befestigung am Grundkörper 22c vorgesehen sein, insbesondere auch eine einfache mechanische Befestigungsschelle. Denkbar ist außerdem eine an der Innenwand 36 des Grundkörpers 22c zur Aufnahme des Röhrchens 24 vorgesehene Ausnehmung, insbesondere in Form einer Nut. Bei beiden Ausgestaltungen wird bei einer Beschädigung der Schutzbeschichtung 23 der Grundkörper 22 bzw.22c und damit auch das eingebettete Röhrchen 24 einer erhöhten thermischen Belastung ausgesetzt. Wird diese zu groß, platzt das Röhrchen 24 auf, und der in seinem Inneren eingestellte Druck sinkt plötzlich und rapide ab. Dieser signifikante zeitliche Druckverlauf wird vom Drucksensor 15 erfasst und in der zentralen Steuer-/Berechnungseinheit 16 ausgewertet.

Besonders günstig ist es, wenn das Röhrchen 24 verglichen mit der Schutzbeschichtung 23 und vor allem mit dem Grundkörper 22 bzw. 22c die geringste Hitzebeständigkeit aufweist. Insbesondere hat es einen niedrigeren Schmelzpunkt beispielsweise von 660° C. Dann besteht das Röhrchen 24 aus Aluminium. Andererseits sollte der Schmelzpunkt des Röhrchens 24 größer sein als die normale Betriebstemperatur im Innern der Leitschaufel 4 bzw.4c. Im Normalbetrieb, also bei intakter Schutzbeschichtung 23, liegt diese Temperatur bei etwa 600° C. Bei defekter Schutzbeschichtung 23 steigt die Temperatur im Innern der Leitschaufel 4 bzw.4c dagegen über den Schmelzpunkt des Röhrchens 24. Durch diese Maßnahme wird erreicht, dass bei einem Defekt an der Schutzbeschichtung 23 zunächst eine Beschädigung am Röhrchen 24 erfolgt, insbesondere also noch bevor der Grundkörper 22 bzw.22c in Mitleidenschaft gezogen wird. Dann kann die Auswerteeinheit 13 durch ein rasches Einleiten einer geeigneten Gegenmaßnahme, beispielsweise eines Abschaltens, eine weitergehende Beschädigung der Strömungsmaschine 1 verhindern.

Außer Aluminium kommen auch andere Materialien für das Röhrchen 24 in Frage, so z. B. Silber mit einem Schmelzpunkt von 932° C, Kupfer mit einem Schmelzpunkt von 1083° C oder eine Legierung aus verschiedenen Metallen. Mittels einer solchen Legierung kann der gewünschte Schmelzpunkt eingestellt werden. Möglich ist außerdem auch der Einsatz mehrerer Röhrchen 24, die jeweils aus einem anderen Material gefertigt sind und dementsprechend auch unterschiedliches Schmelzpunktverhalten aufweisen. Auf diese Weise können verschiedene Stufen der Beschädigung angezeigt werden.

Bei der zweiten Ausgestaltung gemäß Fig. 4 wird die Teil-Messleitung 11 durch eine röhrenförmige Ausnehmung 25, insbesondere in Gestalt einer Bohrung, im Grundkörper 22 gebildet.

Die Ausnehmung 25 ist bevorzugt unmittelbar an der Grenzfläche zwischen der Schutzbeschichtung 23 und dem Grundkörper 22 im Bereich der Vorderkante 17 angeordnet. Ein Teil der Wand der Ausnehmung 25 wird dann durch die Schutzbeschichtung 23 gebildet. Eine Beschädigung der Schutzbeschichtung 23 im relevanten, an die Ausnehmung 25 angrenzenden Bereich führt dann unmittelbar zu einem signifikanten Druckabfall in der Messleitung 9. Diese Ausgestaltung zeichnet sich also durch ein besonders rasches Ansprechen im Fehlerfall aus.

Das Röhrchen 24 und die Ausnehmung 25 weisen vorzugsweise einen Innen-Durchmesser von jeweils zwischen 0,5 und 10 mm auf. Damit ist einerseits eine gute Messgrößenerfassung möglich und andererseits ist der Platzbedarf für die Teil-Messleitung 11 klein genug, um die eigentliche Funktionalität der zu überwachenden Leitschaufeln 4 bzw.4c nicht zu beeinträchtigen.

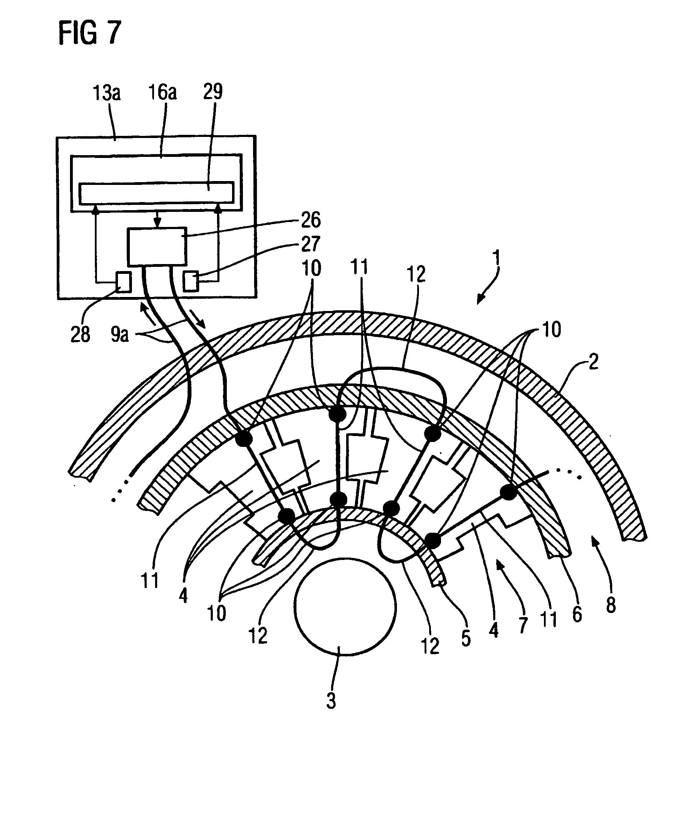

Im Folgenden wird unter Bezugnahme auf die Fig. 7 ein zweites Ausführungsbeispiel für eine Detektions-Anordnung beschrieben. Abgewandelte, aber dennoch zumindest funktionell vergleichbare Teile erhalten dieselben Bezugszeichen wie beim ersten Ausführungsbeispiel jedoch mit einem nachgestellten a. Der Haupt-Unterschied gegenüber dem ersten Ausführungsbeispiel besteht darin, dass eine Messleitung 9a in Gestalt einer Strömungsleitung vorgesehen ist. Der Aufbau der Messleitung 9a entspricht im Wesentlichen dem der Messleitung 9 des ersten Ausführungsbeispiels. Die beiden Enden der Messleitung 9a sind an eine Strömungseinheit 26 der Auswerteeinheit 13a angeschlossen. Die Strömungseinheit 26 erzeugt in der Messleitung 9a eine Strömung mit einer durch die zentrale Steuer-/Berechnungseinheit 16a vorgebbaren Strömungsgeschwindigkeit.

Als Messgröße werden die Strömungsverhältnisse in der Messleitung 9a erfasst. Dies erfolgt mittels zweier Strömungssensoren 27 und 28, die insbesondere die Strömungsgeschwindigkeit an jeweils einem der beiden Enden der Messleitung 9a erfassen.

Die Messwerte der Strömungssensoren 27 und 28 werden einer Differenzeinheit 29 der zentralen Steuer-/Berechnungseinheit 16a zugeführt. Die Differenzeinheit 29 bildet aus den Messwerten ein Differenzsignal, das einen besseren Informationsgehalt beinhaltet. Insbesondere kann an Hand des Differenzsignals auch auf den Ort einer Fehlerstelle innerhalb der Messleitung 9a zurückgeschlossen werden. Grundsätzlich ist aber auch eine Auswertung mit nur einem einzigen Strömungssensor vorstellbar.

Bei Beschädigung einer Leitschaufel 4 bzw.4c und der Messleitung 9a entweicht zumindest ein Teil der Strömung an der Störstelle. Dadurch stellen sich am Anfang und am Ende der Messleitung 9a unterschiedliche Strömungsverhältnisse ein, die detektiert und ausgewertet werden können. Der Strömungswiderstand steigt proportional mit der Länge der durchlaufenen Messleitung 9a, sodass an Hand einer Ermittlung des aktuellen Strömungswiderstands in der zentralen Steuer-/Berechnungseinheit 16a ebenfalls auf den Ort der Fehlerstelle geschlossen werden kann.

Möglich ist auch eine Kombination der Auswertungen nach dem ersten und dem zweiten Ausführungsbeispiel. An beiden Enden der in die Auswerteeinheit 13 oder 13a geführten Messleitung 9 bzw. 9a wird der gleiche statische Druck eingestellt. Im fehlerfreien Fall ist die Messleitung 9 bzw. 9a strömungsfrei. Dies ändert sich, sobald ein Defekt auftritt, durch den die Messleitung 9 bzw. 9a beschädigt wird, also insbesondere aufplatzt. Je nach den herrschenden Druckverhältnissen stellt sich dann eine Strömung zu der Störstelle hin oder von der Störstelle weg ein. Diese Strömungen können mittels der Strömungssensoren 27 und 28 erfasst werden. Der Massestrom dieser sich im Fehlerfall einstellenden Strömungen ist praktisch nur vom Strömungswiderstand und damit im Wesentlichen von der jeweiligen Länge zwischen Leitungsende und Störstelle abhängig. Folglich kann aus einem Vergleich der von den beiden Strömungssensoren 27 und 28 erfassten Messgrößen auf die Lage der Störstelle geschlossen werden.

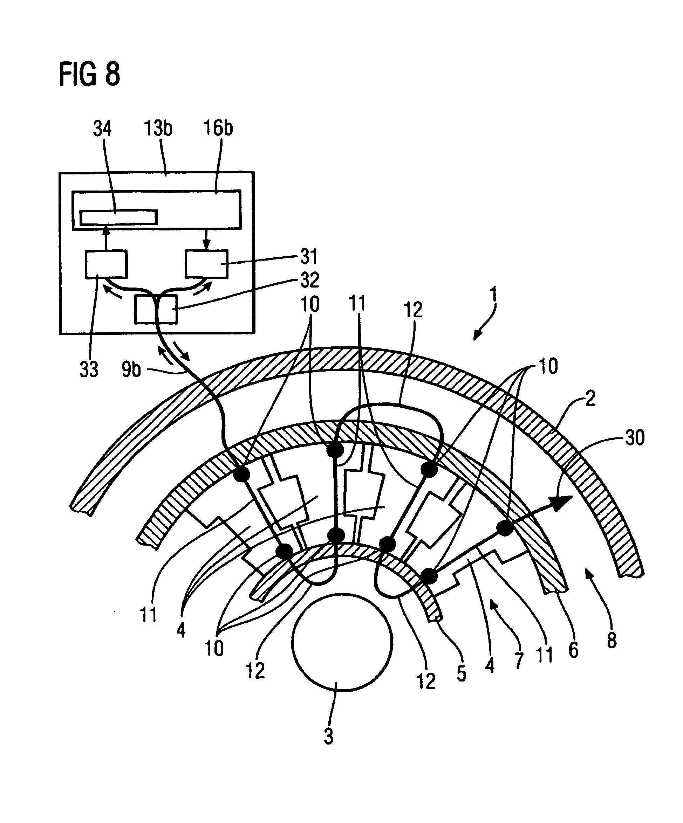

Im Folgenden wird unter Bezugnahme auf die Fig. 8 ein drittes Ausführungsbeispiel einer Detektions-Anordnung beschrieben. Abgewandelte, aber dennoch zumindest funktionell vergleichbare Teile erhalten dieselben Bezugszeichen wie beim ersten Ausführungsbeispiel jedoch mit einem nachgestellten b. Der wesentliche Unterschied liegt wiederum in der Ausgestaltung der Messleitung 9b, die nicht mehr als beidseitig an die Auswerteeinheiten 13 und 13a angeschlossene Ringleitung sondern als nur einseitig an die Auswerteeinheit 13b angeschlossene Stichleitung ausgebildet ist. An ihrem von der Auswerteeinheit 13b abgewandten Ende ist die Messleitung 9b mit einem Leitungsabschluss 30 versehen.

Außerdem ist die Messleitung 9b als akustischer oder als optischer Leiter ausgebildet. Die jeweiligen physikalisch leitenden Medien, also der eigentliche Schallwellenleiter oder der eigentliche Lichtwellenleiter, sind insbesondere im Inneren des Röhrchens 24 gemäß Fig. 3 und Fig. 6 oder der Ausnehmung 25 gemäß Fig. 4 verlegt.

Die Detektions-Anordnung des dritten Ausführungsbeispiels ist für eine Auswertung nach dem Laufzeitprinzip bestimmt. Ein von einem Sendewandler 31 erzeugter kurzer Signalpuls wird über einen Koppler 32 in die Messleitung 9b eingespeist und läuft im ungestörten Betriebsfall zum Leitungsabschluss 30, an dem er reflektiert wird, um in umgekehrter Richtung zurück zur Auswerteeinheit 13b zu laufen. In der Auswerteeinheit 13b wird der reflektierte Signalpuls über den Koppler 32 einem Empfangswandler 33 zugeführt, der das Signal nach einer entsprechenden Signalwandlung an eine Laufzeiteinheit 34 der zentralen Steuer-/Berechnungseinheit 16b übermittelt. In der Laufzeiteinheit 34 wird die Laufzeit des Signalpulses bestimmt. Bei einer Reflexion am Leitungsabschluss 30 erkennt die zentrale Steuer-/Berechnungseinheit 16b auf einen fehlerfreien Betrieb. Ergibt sich jedoch auf Grund einer Beschädigung einer der überwachten Leitschaufeln 4 bzw. 4c auch innerhalb der Messleitung 9b eine Diskontinuität, so wird der Signalpuls zumindest teilweise bereits an dieser Diskontinuität reflektiert und in der Laufzeiteinheit 34 wird eine einen Fehlerfall anzeigende verkürzte Laufzeit ermittelt. Auf Grund der Laufzeit kann außerdem sehr leicht der genaue Ort der Fehlerstelle bestimmt werden.

Alternativ zu den in den Fig. 1 bis 8 gezeigten Ausführungsbeispielen ist es möglich, die Messleitungen 9, 9a und 9b auch mehrfach, beispielsweise mäanderförmig, durch die zu überwachende Komponente zu führen. Besonders günstig ist dabei eine Variante, bei der die Kupplungsstellen 10 ausschließlich auf der der Gehäuse-Außenwand 2 zugewandten Seite der Leitschaufeln 4 bzw. 4c angeordnet sind. Die Zwischenstücke 12 befinden sich dann ausschließlich im Kühlbereich 8, in dem für die Leitungsführung mehr Platz zur Verfügung steht als auf der der Rotorwelle 3 zugewandten Seite der Leitschaufeln 4 bzw.4c.

Obwohl in den Ausführungsbeispielen nur eine Überwachung der Leitschaufeln 4 bzw. 4c gezeigt ist, lassen sich die beschriebenen Detektionsprinzipien auch ohne weiteres für eine Überwachung der Laufschaufeln der Strömungsmaschine 1 einsetzen.

## Patentansprüche

1. Anordnung zur Detektion einer Beschädigung einer Komponente (4; 4c) einer Strömungsmaschine (1) umfassend
- eine zur Erfassung einer Messgröße bestimmte Messleitung (9; 9a), die zumindest teilweise durch das Innere der Komponente (4; 4c) verläuft, sodass eine Beschädigung der zu überwachenden Komponente (4; 4c) auch zu einer Veränderung der Messleitung (9; 9a) führt,
und
- eine Auswerteeinheit (13; 13a), an die die Messleitung (9; 9a) zumindest mit ihrem einen Ende angeschlossen ist und die zur Auswertung einer durch die Veränderung der Messleitung (9; 9a) hervorgerufenen Änderung der Messgröße ausgebildet ist,
wobei
- die zu überwachende Komponente (4; 4c) einen Grundkörper (22; 22c) umfasst,
**dadurch gekennzeichnet, dass**
- die Messleitung (9; 9a) als Druck- oder Strömungsleitung ausgebildet ist.

2. Anordnung zur Detektion einer Beschädigung einer Komponente (4; 4c) einer Strömungsmaschine (1) umfassend
- eine zur Erfassung einer Messgröße bestimmte Messleitung (9b), die zumindest teilweise durch das Innere der Komponente (4; 4c) verläuft, sodass eine Beschädigung der zu überwachenden Komponente (4; 4c) auch zu einer Veränderung der Messleitung (9b) führt,
und
- eine Auswerteeinheit (13b), an die die Messleitung (9b) zumindest mit ihrem einen Ende angeschlossen ist und die zur Auswertung einer durch die Veränderung der Messleitung (9b) hervorgerufenen Änderung der Messgröße ausgebildet ist,
wobei
- die zu überwachende Komponente (4; 4c) einen Grundkörper (22; 22c) umfasst,
**dadurch gekennzeichnet, dass**
- die Messleitung (9b) als akustischer Leiter ausgebildet ist.

3. Anordnung nach Anspruch 2, **dadurch gekennzeichnet, dass** die Messleitung (9b) in einem im Inneren der zu überwachenden Komponente (4) insbesondere mittels einer röhrenförmigen Ausnehmung (25) oder eines in die zu überwachende Komponente (4) eingebetteten Röhrchens (24) gebildeten Hohlraum angeordnet ist.

4. Anordnung nach Anspruch 2 oder 3, **dadurch gekennzeichnet, dass** die Auswerteeinheit (13b) eine Laufzeiteinheit (34) zur Auswertung eines in der Messleitung (9b) erzeugten Reflexionssignals beinhaltet.

5. Anordnung zur Detektion einer Beschädigung einer Komponente (4; 4c) einer Strömungsmaschine (1) umfassend
- eine zur Erfassung einer Messgröße bestimmte-Messleitung (9b), die zumindest teilweise durch das Innere der Komponente (4; 4c) verläuft, sodass eine Beschädigung der zu überwachenden Komponente (4; 4c) auch zu einer Veränderung der Messleitung (9b) führt,
und
- eine Auswerteeinheit (13b), an die die Messleitung (9b) zumindest mit ihrem einen Ende angeschlossen ist und die zur Auswertung einer durch die Veränderung der Messleitung (9b) hervorgerufenen Änderung der Messgröße ausgebildet ist,
wobei
- die zu überwachende Komponente (4; 4c) einen Grundkörper (22; 22c) umfasst,
- die Messleitung (9b) als optischer Leiter ausgebildet ist, und
- die Messleitung (9b) in einem im Inneren der zu überwachenden Komponente (4) insbesondere mittels einer röhrenförmigen Ausnehmung (25) oder eines in die zu überwachende Komponente (4) eingebetteten Röhrchens (24) gebildeten Hohlraum angeordnet ist,
**dadurch gekennzeichnet, dass**
- die Auswerteeinheit (13b) eine Laufzeiteinheit (34) zur Auswertung eines in der Messleitung (9b) erzeugten Reflexionssignals beinhaltet.

6. Anordnung nach Anspruch 1, **dadurch gekennzeichnet, dass** die Messleitung (9; 9a) einen im Inneren der zu überwachenden Komponente (4) insbesondere mittels einer röhrenförmigen Ausnehmung (25) oder eines in die zu überwachende Komponente (4) eingebetteten Röhrchens (24) gebildeten Hohlraum umfasst.

7. Anordnung nach Anspruch 1 oder 6, **dadurch gekennzeichnet, dass**
- die Messleitung (9) als Druckleitung ausgebildet ist, die mit beiden Enden an die Auswerteeinheit (13) angeschlossen ist,
und
- die Auswerteeinheit (13) insbesondere eine an das eine Ende angeschlossene Druckquelle (14) und einen an das andere Ende angeschlossenen Drucksensor (15) zur Erfassung des Drucks in der Druckleitung beinhaltet.

8. Anordnung nach einem der Ansprüche 1, 6 oder 7, **dadurch gekennzeichnet, dass**
- die Messleitung (9a) als Strömungsleitung ausgebildet ist, und
- die Auswerteeinheit (13a) mindestens einen Strömungssensor (27, 28) beinhaltet, der die Strömungsverhältnisse in der Strömungsleitung erfasst.

9. Anordnung nach einem der Ansprüche 1, 6 bis 8, **dadurch gekennzeichnet, dass** die Auswerteeinheit (13a) eine Differenzeinheit (29) zur Bildung und Auswertung eines Vergleichssignals, insbesondere eines Differenzsignals, zwischen zwei an verschiedenen Stellen der Messleitung (9a) erfassten Messgrö-. ßen beinhaltet.

10. Anordnung nach einem der Ansprüche 3 bis 9, **dadurch gekennzeichnet, dass**
- der Grundkörper (22) der zu überwachende Komponente (4) mit einer Schutzbeschichtung (23) versehenen ist
und
- die Ausnehmung (25) so an der Grenze zwischen Grundkörper (22) und Schutzbeschichtung (23) angeordnet ist, dass die Schutzbeschichtung (23) teilweise die Wand der Ausnehmung (25) bildet.

11. Anordnung nach einem der Ansprüche 3 bis 10, **dadurch gekennzeichnet, dass** das Röhrchen (24) eine geringere Hitzebeständigkeit aufweist als die zu überwachende Komponente (4).

12. Anordnung nach Anspruch 1, **dadurch gekennzeichnet, dass**
- der Grundkörper (22c) einen Hohlraum (35) aufweist
und
- die Messleitung (9; 9a) einen im Inneren der zu überwachenden Komponente (4c) mittels eines an einer Innenwand (36) des Hohlraums (35) angeordneten Röhrchens (24) gebildeten Hohlraum umfasst.

13. Anordnung nach Anspruch 2, **dadurch gekennzeichnet, dass**
- der Grundkörper (22c) einen Hohlraum (35) aufweist
und
- die Messleitung (9b) in einem im Inneren der zu überwachenden Komponente (4c) mittels eines an einer Innenwand (36) des Hohlraums (35) angeordneten Röhrchens (24) gebildeten Hohlraum angeordnet ist.

14. Anordnung nach Anspruch 5, **dadurch gekennzeichnet, dass**
- der Grundkörper (22c) einen Hohlraum (35) aufweist
und
- das Röhrchens (24) an einer Innenwand (36) des Hohlraums (35) angeordnet ist.

15. Anordnung nach einem der Ansprüche 12 bis 14, **dadurch gekennzeichnet, dass** das Röhrchen (24) mittels einer Lötverbindung an der Innenwand (36) des Hohlraums (35) befestigt ist.

16. Anordnung nach einem der Ansprüche 12 bis 15, **dadurch gekennzeichnet, dass** das Röhrchen (24) mittels eines Befestigungsmittels, insbesondere einer Befestigungsschelle, an der Innenwand (36) des Hohlraums (35) befestigt ist.

17. Anordnung nach einem der Ansprüche 12 bis 16, **dadurch gekennzeichnet, dass** das Röhrchen (24) in einer Ausnehmung, insbesondere einer Nut, angeordnet ist.

18. Anordnung nach einem der Ansprüche 12 bis 17, **dadurch gekennzeichnet, dass**
- der Grundkörper (22c) der zu überwachende Komponente (4c) mit einer Schutzbeschichtung (23) versehenen ist
und
- das Röhrchen (24) eine geringere Hitzebeständigkeit aufweist als die zu überwachende Komponente (4c).

19. Verfahren zur Detektion einer Beschädigung einer Komponente (4; 4c) einer Strömungsmaschine (1), bei dem
- mittels einer zumindest teilweise durch das Innere der Komponente (4; 4c) verlaufenden Messleitung (9; 9a)eine Messgröße erfasst wird,
- die Messleitung (9; 9a) infolge einer Beschädigung der Komponente (4; 4c) verändert wird,
und
- eine durch die Veränderung der Messleitung (9; 9a) hervorgerufene Änderung der Messgröße ausgewertet wird,
**dadurch gekennzeichnet, dass**
- als Messgröße ein Druck in der als Druckleitung ausgebildeten Messleitung (9) oder mindestens eine Strömungsgeschwindigkeit in der als Strömungsleitung ausgebildeten Messleitung (9a) erfasst wird.

20. Verfahren nach Anspruch 19, **dadurch gekennzeichnet, dass** an mindestens zwei verschiedenen Stellen der Messleitung (9a) jeweils ein Druck oder eine Strömungsgeschwindigkeit erfasst wird.

21. Verfahren nach Anspruch 20, **dadurch gekennzeichnet, dass** aus zwei der erfassten Drücke oder Strömungsgeschwindigkeiten ein Vergleichssignal, insbesondere ein Differenzwert, gebildet und ausgewertet wird.

22. Verfahren zur Detektion einer Beschädigung einer Komponente (4; 4c) einer Strömungsmaschine (1), bei dem
- mittels einer zumindest teilweise durch das Innere der Komponente (4; 4c) verlaufenden Messleitung (9b)eine Messgröße erfasst wird,
- die Messleitung (9b) infolge einer Beschädigung der Komponente (4; 4c) verändert wird,
und
- eine durch die Veränderung der Messleitung (9b) hervorgerufene Änderung der Messgröße ausgewertet wird,
**dadurch gekennzeichnet, dass**
- als Messgröße eine akustische Größe erfasst wird.

23. Verfahren nach Anspruch 22, **dadurch gekennzeichnet, dass** ein in der Messleitung (9b) erzeugtes Reflexionssignal erfasst und ausgewertet wird.

24. Verfahren zur Detektion einer Beschädigung einer Komponente (4; 4c) einer Strömungsmaschine (1), bei dem
- mittels einer zumindest teilweise durch das Innere der Komponente (4; 4c) verlaufenden Messleitung (9b)eine Messgröße erfasst wird,
- die Messleitung (9b) infolge einer Beschädigung der Komponente (4; 4c) verändert wird,
- eine durch die Veränderung der Messleitung (9b) hervorgerufene Änderung der Messgröße ausgewertet wird,
und
- als Messgröße eine optische Größe erfasst wird,
**dadurch gekennzeichnet, dass**
- ein in der Messleitung (9b) erzeugtes Reflexionssignal erfasst und ausgewertet wird.

## Claims

1. Arrangement for detection of damage to a component (4; 4c) of a turbomachine (1), comprising
- a measuring line (9; 9a) which is defined for recording a measurable variable, which extends at least partially through the inside of the component (4; 4c), so that damage to the component (4; 4c) which is to be monitored also leads to a change of the measuring line (9; 9a),
and
- a computing unit (13; 13a), to which the measuring line (9; 9a) is connected at least by its one end and which is formed for evaluating a change of the measurable variable which is caused by the change of the measuring line (9; 9a),
wherein
- the component (4; 4c) which is to be monitored comprises a basic body (22; 22c),
**characterized in that**
- the measuring line (9; 9a) is formed as a pressure line or a flow line.

2. Arrangement for detection of damage to a component (4; 4c) of a turbomachine (1), comprising
- a measuring line (9b) which is defined for recording a measurable variable, which extends at least partially through the inside of the component (4; 4c), so that damage to the component (4; 4c) which is to be monitored also leads to a change of the measuring line (9b),
and
- a computing unit (13b), to which the measuring line (9b) is connected at least by its one end and which is formed for evaluating a change of the measurable variable which is caused by the change of the measuring line (9b),
wherein
- the component (4; 4c) which is to be monitored comprises a basic body (22; 22c),
**characterized in that**
- the measuring line (9b) is formed as an acoustic conductor.

3. Arrangement according to Claim 2, **characterized in that** the measuring line (9b) is arranged in a cavity which is formed inside the component (4) which is to be monitored, especially by means of a tube-form opening (25) or by means of a tube (24) which is embedded into the component (4) which is to be monitored.

4. Arrangement according to Claim 2 or 3, **characterized in that** the computing unit (13b) includes a run-time unit (34) for evaluating a reflection signal which is generated in the measuring line (9b).

5. Arrangement for detection of damage to a component (4; 4c) of a turbomachine (1), comprising
- a measuring line (9b) which is defined for recording a measurable variable, which extends at least partially through the inside of the component (4; 4c), so that damage to the component (4; 4c) which is to be monitored also leads to a change of the measuring line (9b),
and
- a computing unit (13b), to which the measuring line (9b) is connected at least by its one end and which is formed for evaluating a change of the measurable variable which is caused by the change of the measuring line (9b),
wherein
- the component (4; 4c) which is to be monitored comprises a basic body (22; 22c),
- the measuring line (9b) is formed as an optical conductor, and
- the measuring line (9b) is arranged in a cavity which is formed inside the component (4) which is to be monitored, especially by means of a tube-form opening (25) or by means of a tube (24) which is embedded into the component (4) which is to be monitored,
**characterized in that**
- the computing unit (13b) includes a run-time unit (34) for evaluating a reflection signal which is generated in the measuring line (9b).

6. Arrangement according to Claim 1, **characterized in that** the measuring line (9; 9a) comprises a cavity which is formed inside the component (4) which is to be monitored, especially by means of a tube-form opening (25) or by means of a tube (24) which is embedded into the component (4) which is to be monitored.

7. Arrangement according to Claim 1 or 6, **characterized in that**
- the measuring line (9) is formed as a pressure line, which is connected by both ends to the computing unit (13),
and
- the computing unit (13) especially includes a pressure source (14), which is connected to the one end, and a pressure sensor (15) for recording the pressure in the pressure line, which is connected to the other end.

8. Arrangement according to one of Claims 1, 6 or 7, **characterized in that**
- the measuring line (9a) is formed as a flow line,
and
- the computing unit (13a) includes at least one flow sensor (27, 28) which records the flow conditions in the flow line.

9. Arrangement according to one of Claims 1, 6 to 8, **characterized in that** the computing unit (13a) includes a difference unit (29) for forming and evaluating a comparison signal, especially a difference signal, between two measurable variables which are recorded at different points of the measuring line (9a).

10. Arrangement according to one of Claims 3 to 9, **characterized in that**
- the basic body (22) of the component (4) which is to be monitored is provided with a thermal barrier coating (23),
and
- the opening (25) is arranged on the boundary between basic body (22) and thermal barrier coating (23) so that the thermal barrier coating (23) partially forms the wall of the opening (25).

11. Arrangement according to one of Claims 3 to 10, **characterized in that** the tube (24) has a lower heat resistance than the component (4) which is to be monitored.

12. Arrangement according to Claim 1, **characterized in that**
- the basic body (22c) has a cavity (35),
and
- the measuring line (9; 9a) comprises a cavity which is formed inside the component (4c) which is to be monitored by means of a tube (24) which is arranged on an inner wall (36) of the cavity (35).

13. Arrangement according to Claim 2, **characterized in that**
- the basic body (22c) has a cavity (35),
and
- the measuring line (9b) is arranged in a cavity which is formed inside the component (4c) which is to be monitored by means of a tube (24) which is arranged on an inner wall (36) of the cavity (35).

14. Arrangement according to Claim 5, **characterized in that**
- the basic body (22c) has a cavity (35),
and
- the tube (24) is arranged on an inner wall (36) of the cavity (35).

15. Arrangement according to one of Claims 12 to 14, **characterized in that** the tube (24) is fastened on the inner wall (36) of the cavity (35) by means of a soldered connection.

16. Arrangement according to one of Claims 12 to 15, **characterized in that** the tube (24) is fastened on the inner wall (36) of the cavity (35) by means of a fastening device, especially a fastening clamp.

17. Arrangement according to one of Claims 12 to 16, **characterized in that** the tube (24) is arranged in an opening, especially a slot.

18. Arrangement according to one of Claims 12 to 17, **characterized in that**
- the basic body (22c) of the component (4c) which is to be monitored is provided with a thermal barrier coating (23),
and
- the tube (24) has a lower heat resistance than the component (4c) which is to be monitored.

19. Method for detection of damage to a component (4; 4c) of a turbomachine (1), in which
- a measurable variable is recorded by means of a measuring line (9; 9a) which at least partially extends through the inside of the component (4; 4c),
- the measuring line (9; 9a) is changed as a result of damage to the component (4; 4c),
and
- a change of the measurable variable which is caused by the change of the measuring line (9; 9a) is evaluated,
**characterized in that**
- a pressure in the measuring line (9), which is formed as a pressure line, or at least one flow velocity in the measuring line (9a), which is formed as a flow line, is recorded as a measurable variable.

20. Method according to Claim 19, **characterized in that** a pressure or a flow velocity is recorded at at least two different points of the measuring line (9a) in each case.

21. Method according to Claim 20, **characterized in that** a comparison signal, especially a difference value, is formed and evaluated from two of the recorded pressures or flow velocities.

22. Method for detection of damage to a component (4; 4c) of a turbomachine (1), in which
- a measurable variable is recorded by means of a measuring line (9b) which at least partially extends through the inside of the component (4; 4c),
- the measuring line (9b) is changed as a result of damage to the component (4; 4c),
and
- a change of the measurable variable which is caused by the change of the measuring line (9b) is evaluated,
**characterized in that**
- an acoustic quantity is recorded as a measurable variable.

23. Method according to Claim 22, **characterized in that** a reflection signal which is generated in the measuring line (9b) is recorded and evaluated.

24. Method for detection of damage to a component (4; 4c) of a turbomachine (1), in which
- a measurable variable is recorded by means of a measuring line (9b) which at least partially extends through the inside of the component (4; 4c),
- the measuring line (9b) is changed as a result of damage to the component (4; 4c),
- a change of the measurable variable which is caused by the change of the measuring line (9b) is evaluated,
and
- an optical quantity is recorded as a measurable variable,
**characterized in that**
- a reflection signal which is generated in the measuring line (9b) is recorded and evaluated.

## Revendications

1. Dispositif de détection d'un endommagement d'un élément (4 ; 4c) d'une turbomachine (1) comprenant
- une ligne (9 ; 9a) de mesure, qui est destinée à relever une grandeur de mesure et qui s'étend au moins en partie à l'intérieur de l'élément (4 ; 4c), de sorte qu'un endommagement de l'élément (4 ; 4c) à contrôler entraîne aussi une modification de la ligne (9 ; 9a) de mesure,
et
- une unité (13 ; 13a) d'exploitation à laquelle la ligne (9 ; 9a) de mesure est raccordée au moins par l'une de ses extrémités et qui est constituée pour exploiter une variation de la grandeur de mesure provoquée par la modification de la ligne (9 ; 9a) de mesure,
dans lequel
- l'élément (4 ; 4c) à contrôler comprend une pièce (22 ; 2c) de base,
**caractérisé en ce que**
- la ligne (9 ; 9a) de mesure est constituée en ligne de pression ou en ligne d'écoulement.

2. Dispositif de détection d'un endommagement d'un élément (4 ; 4c) d'une turbomachine (1) comprenant
- une ligne (9 ; 9a) de mesure, qui est destinée à relever une grandeur de mesure et qui s'étend au moins en partie dans l'intérieur de l'élément (4 ; 4c), de sorte qu'un endommagement de l'élément (4 ; 4c) à contrôler entraîne aussi une modification de la ligne (9 ; 9a) de mesure,
et
- une unité (13 ; 13a) d'exploitation, à laquelle la ligne (9 ; 9a) de mesure est raccordée au moins par l'une de ses extrémités et qui est constituée pour exploiter une variation de la grandeur de mesure provoquée par la modification de la ligne (9 ; 9a) de mesure,
dans lequel
- l'élément (4 ; 4c) à contrôler comprend une pièce (22 ; 2c) de base,
**caractérisé en ce que**
- la ligne (9b) de mesure est constituée en conducteur acoustique.

3. Dispositif suivant la revendication 2, **caractérisé en ce que** la ligne (9b) de mesure est disposée dans une cavité formée à l'intérieur de l'élément (4) à contrôler, notamment au moyen d'un évidement (25) tubulaire ou d'un petit cube (24) incorporé à l'élément (4) à contrôler.

4. Dispositif suivant la revendication 2 ou 3, **caractérisé en ce que** l'unité (13b) d'exploitation comporte une unité (34) de temps de parcours pour exploiter un signal de réflexion produit dans la ligne (9b) de mesure.

5. Dispositif de détection d'un endommagement d'un élément (4 ; 4c) d'une turbomachine (1) comprenant
- une ligne (9 ; 9a) de mesure, qui est destinée à relever une grandeur de mesure et qui s'étend au moins en partie à l'intérieur de l'élément (4 ; 4c), de sorte qu'un endommagement de l'élément (4 ; 4c) à contrôler entraîne aussi une modification de la ligne (9 ; 9a) de mesure,
et
- une unité (13 ; 13a) d'exploitation, à laquelle la ligne (9 ; 9a) de mesure est raccordée au moins par l'une de ses extrémités et qui est constituée pour exploiter une variation de la grandeur de mesure provoquée par la modification de la ligne (9 ; 9a) de mesure,
dans lequel
- l'élément (4 ; 4c) à contrôler comprend une pièce (22 ; 22c) de base,
- la ligne (9b) de mesure est constituée en conducteur optique,
et
la ligne (9b) de mesure est disposée dans une cavité formée à l'intérieur de l'élément (4) à contrôler, notamment au moyen d'un évidement (25) tubulaire ou d'un petit tube (24) incorporé à l'élément (4) à contrôler,
**caractérisé en ce que**
- l'unité (13b) d'exploitation comporte une unité (34) de temps de parcours pour exploiter un signal de réflexion produit dans la ligne (9b) de mesure.

6. Dispositif suivant la revendication 1, **caractérisé en ce que** la ligne (9b) de mesure comprend une cavité formée à l'intérieur de l'élément (4) à contrôler, notamment au moyen d'un évidement (25) tubulaire ou d'un petit tube (24) incorporé à l'élément (4) à contrôler.

7. Dispositif suivant la revendication 1 ou 6, **caractérisé en ce que**
- la ligne (9) de mesure est constituée en ligne de pression qui est raccordée par les deux extrémités à l'unité (13) d'exploitation,
et
- l'unité (3) d'exploitation comporte, notamment, une source (14) de pression raccordée à l'une des extrémités et un capteur (15) de pression raccordé à l'autre extrémité est destiné à relever la pression dans la ligne de pression.

8. Dispositif suivant l'une des revendications 1, 6 ou 7, **caractérisé en ce que**
- la ligne (9a) de mesure est constituée en ligne d'écoulement,
et
- l'unité (13) d'exploitation comprend au moins un capteur (27, 28) d'écoulement qui relève les conditions d'écoulement dans la ligne d'écoulement.

9. Dispositif suivant l'une des revendications 1, 6 à 8, **caractérisé en ce que** l'unité (13a) d'exploitation comporte une unité (29) de formation de différence pour former et exploiter un signal de comparaison, notamment un signal de différence, entre deux grandeurs de mesure relevées en des points différents de la ligne (9a) de mesure.

10. Dispositif suivant l'une des revendications 3 à 9, **caractérisé en ce que**
- la pièce (22) de base de l'élément (4) à contrôler est munie d'un revêtement (23) de protection
et
- l'évidement (25) est disposé à la limite entre la pièce (22) de base et le revêtement (23) de protection de façon à ce que le revêtement (23) de protection forme, en partie, la paroi d'évidement (25).

11. Dispositif suivant l'une des revendications 3 à 10, **caractérisé en ce que** le petit tube (24) a une résistance à la chaleur plus petite que l'élément (4) à contrôler.

12. Dispositif suivant la revendication 1, **caractérisé en ce que**
- la pièce (22c) de base a une cavité (35)
et
- la ligne (9a ; 9a) de mesure comprend une cavité formée à l'intérieur de l'élément (4c) à contrôler au moyen d'un petit tube (24) disposé sur une paroi (36) intérieure de la cavité (35).

13. Dispositif suivant la revendication 2, **caractérisé en ce que**
- la pièce (22c) de base a une cavité
et
- la ligne (9b) de mesure est disposée dans une cavité formée à l'intérieur de l'élément (4c) à contrôler au moyen d'un petit tube (24) disposé sur une paroi (36) intérieure de la cavité (35).

14. Dispositif suivant la revendication 5, **caractérisé en ce que**
- la pièce (22c) de base a une cavité (35)
et
- le petit tube (24) est disposé sur une paroi (36) intérieure de la cavité (35).

15. Dispositif suivant l'une des revendications 12 à 14, **caractérisé en ce que** le petit tube (24) est fixé à la paroi (36) intérieure de la cavité (35) au moyen d'un joint brasé.

16. Dispositif suivant l'une des revendications 12 à 15, **caractérisé en ce que** le petit tube (24) est fixé à la paroi (36) intérieure de la cavité (35) à l'aide d'un moyen de fixation, notamment d'un collier de fixation.

17. Dispositif suivant l'une des revendications 12 à 16, **caractérisé en ce que** le petit tube (24) est disposé dans un évidement, notamment dans une gorge.

18. Dispositif suivant l'une des revendications 12 à 17, **caractérisé en ce que**
- la pièce (22c) de base de l'élément (4c) à contrôler est munie d'un revêtement (23) de protection
et
- le petit tube (24) a une résistance à la chaleur plus petite que l'élément (4c) à contrôler.

19. Procédé de détection d'un endommagement d'un élément (4 ; 4c) d'une turbomachine (1), dans lequel
- on relève une grandeur de mesure au moyen d'une ligne (9 ; 9a) de mesure s'étendant au moins en partie dans l'intérieur de l'élément (4 ; 4c),
- la ligne (9 ; 9a) de mesure se modifie en raison d'un endommagement de l'élément (4 ; 4c),
et
- on exploite une variation de la grandeur de mesure provoquée par la modification de la ligne (9 ; 9a) de mesure,
**caractérisé en ce que**
- on relève comme grandeur de mesure une pression dans la ligne (9) de mesure constituée en ligne de pression ou au moins une vitesse d'écoulement dans la ligne (9a) de mesure constituée en ligne d'écoulement.

20. Procédé suivant la revendication 19, **caractérisé en ce que** l'on relève respectivement une pression ou une vitesse d'écoulement en au moins deux points différents de la ligne (9a) de mesure.

21. Procédé suivant la revendication 20, **caractérisé en ce que** l'on forme et on exploite un signal de comparaison, notamment une valeur de différence, obtenu à partir de deux des pressions ou vitesses d'écoulement relevées.

22. Procédé de détection d'un endommagement d'un élément (4 ; 4c) d'une turbomachine (1), dans lequel
- on relève une grandeur de mesure au moyen d'une ligne (9b) de mesure s'étendant au moins en partie dans l'intérieur de l'élément (4 ; 4c),
- la ligne (9b) de mesure se modifie en raison d'un endommagement de l'élément (4 ; 4c),
et
- on exploite une variation de la grandeur de mesure provoquée par la modification de la ligne (9b) de mesure,
**caractérisé en ce que**
- on relève une grandeur acoustique comme grandeur de mesure.

23. Procédé suivant la revendication 22, **caractérisé en ce que** l'on relève et exploite un signal de réflexion produit dans la ligne (9b) de mesure.

24. Procédé de détection d'un endommagement d'un élément (4 ; 4c) d'une turbomachine (1), dans lequel
- on relève une grandeur de mesure au moyen d'une ligne (9b) de mesure s'étendant au moins en partie dans l'intérieur de l'élément (4 ; 4c),
- la ligne (9b) de mesure se modifie en raison d'un endommagement de l'élément (4 ; 4c),
- on exploite une variation de la grandeur de mesure provoquée par la modification de la ligne (9b) de mesure,
et
- on détecte une grandeur optique comme grandeur de mesure,
**caractérisé en ce que**
- on détecte et on exploite un signal de réflexion produit dans la ligne (9b) de mesure.
